# EUROPEAN PATENT APPLICATION

(11) **EP 2 939 915 A1**
(43) Date of publication of application: **04.11.2015**
(21) Application number: 12890721.9
(22) Date of filing: 26.12.2012
(51) Int. Cl.: B62M 3/00, B62K 19/34

(54) **BICYCLE CRANK SHAFT DEVICE**

(71) Applicant: Gokiso Giken Co., Ltd, Ama-gun, Aichi 497-0030 (JP)
(72) Inventor: KONDO Yutaka, Ama-gun Aichi 497-0030 (JP)
(74) Representative: White, Duncan Rohan
(86) International application number: PCT/JP2012/083575
(87) International publication number: WO 2014/102922

(57) **Abstract**

[Object] To provide a full float type crankshaft device for bicycle which allows a sub-assembly formed by integrating crankshafts to be mounted on a body side.

[Constitution] The crankshaft device includes a shaft 1 provided at a center of a cylindrical hanger member 9, having cranks attached to both end portions, which is configured to have bearings 3,3 provided at inner sides where the cranks are attached, a housing 2 configured at an outer diameter side of the shaft 1 to support the shaft 1 via the bearings 3, and clamp nuts 5 each with a cup-like shape as a whole, which are attached to both end portions of the housing 2 having O-rings 6 as rubber elastic elements interposed between both end portions.

## Description

### Technical Field

The present invention relates to a crankshaft assembly configured to support a rotating motion of a left-and-right pair of cranks. That is, the invention relates to a crankshaft device for bicycle.

### Background Art

Japanese Unexamined Patent Application Publication No. 2006-151158 or No. 2006-142947 discloses the generally employed art as described above, which is configured by mounting a shaft (crankshaft) on a cylindrical hanger member as a base attached to the frame via a ball bearing, and further mounting cranks onto both end portions of the shaft so as to be bilaterally symmetrical. The left and right ball bearings have the respective outer sides attached to the hanger members via the respective bearing receiving members. The bearing receiving member is configured to be installed so as to be positionally adjustable in the axial direction of the shaft.

### Citation List

### Patent Literature

Patent Literature 1 : Japanese Unexamined Patent Application Publication No. 2006-151158
Patent Literature 2 : Japanese Unexamined Patent Application Publication No. 2006-142947

### Summary of Invention

### Technical Problem

According to the generally employed (related) art, the hanger member to which the crankshaft or the like is attached is configured to be mounted on the body frame via welding means. Accordingly, there is a possibility of distortion at the left and right bearing mount portions during welding. It is necessary to preliminarily remove the distortion caused by the welding. It is further necessary to correct the assembly error due to the welding distortion when assembling the left and right bearings. The aforementioned correction will be carried out individually for the respective bodies. There may also be the problem that the aforementioned work is largely dependent upon proficiency or skill of the operator. In order to solve such problem, the crankshaft (shaft) and other parts are preliminarily integrated into a sub-assembly so as to be mounted on the hanger member of the body. It is therefore an object (target) of the present invention to provide a full-float type crankshaft device for bicycle as described above.

### Solution to Problem

In order to achieve the task as described above, the present invention provides the following means. That is, according to a first invention described in Claim 1, a crankshaft device for bicycle, which is provided at a cylindrical hanger member formed at a lower end portion of a body frame, serving to transmit a rotating motion from a crank to a driving wheel via a gear and a chain. It includes a shaft provided at a center of the cylindrical hanger member, having cranks attached to both end portions, and a bearing attached to an inner side to which the crank is attached, a housing with a cylindrical shape provided at an outer diameter side of the shaft, having both end portions configured to support the shaft via the bearings, and a clamp nut attached to each of both end portions of the housing having a rubber elastic element therebetween, the clamp nut having a cup-like shape as a whole, and bottom portion provided with a disc-like flange portion at which a cylinder portion is formed in a direction vertical thereto, the cylinder portion partially having a male screw threaded with a female screw formed at each of end portions of the hanger member.

According to a second invention described in Claim 2 in addition to the crankshaft device for bicycle of Claim 1, bearings provided at portions around both end portions of the shaft between the shaft and the housing are formed each as a thin ball bearing which is obtained by making at least one of an inner race and an outer race to have a thin structure. A bearing set formed by combining a plurality of the thin ball bearings is provided at an end of at least a side where the gear is attached.

According to a third invention described in Claim 3 in addition to the crankshaft device for bicycle of Claim 1, rubber elastic elements configured as O-rings are provided at both end portions of the housing between an outer diameter side of both end portions of the housing and an inner diameter side of the clamp nut attached to the both end portions of the housing. The O-ring like rubber elastic elements are provided at two positions including both terminal end portions of the housing, and leading ends of the clamp nut attached to the both end portions of the housing.

### Advantageous Effects of Invention

The first invention described in Claim 1 will be explained. The aforementioned structure allows the bearing mechanism serving to transfer the rotating motion from the crank to the wheel side to be integrally formed as a sub-assembly by combining the cylindrical housing as the base with the bearing set provided at both ends of the housing. The sub-assembly as the basic structure is assembled with the cylindrical hanger member formed at the lower end of the body frame so as to realize smooth and efficient assembly work. The sub-assembly structure has both end portions attached to the hanger member via predetermined rubber elastic elements. This makes it possible to automatically correct the assembly error that occurs between the hanger member and the component member around the crankshaft in the sub-assembled state. Furthermore, the rubber elastic element is interposed between those members so as to ensure support of the sub-assembly while being floated from the hanger member that forms the body frame. That is, the bearing mechanism around the crankshaft is supported in the fully floated state while being floated from the body frame. Employment of the aforementioned floating support structure according to the present invention alleviates vibration or shock generated from the area around the crankshaft so as to be propagated to the body frame side. This also makes it possible to prevent the influence of distortion of the frame which occurs in response to input of strong force to the frame from being given to the bearing side. In this way, prevention of the influence of the frame distortion to the bearing side ensures smooth rotating motion of the crank, that is, smooth pedaling operation. As a result, this makes it possible to alleviate the sense of discomfort felt by the bicycle rider.

The second invention described in Claim 2 is configured to form the bearing into a thin ball bearing having an inner race or an outer race formed into a thin structure. This makes it possible to realize a light and compact bearing, and accordingly, light and compact structure around the crankshaft. According to the present invention, a plurality of ball bearings combined as a set may be attached at least to the end portion at the side to which the gear is installed. This reduces the load input to the respective bearings, resulting in improved durability of the bearing. Furthermore, this may prevent the influence of the frame distortion caused upon input of the strong force to the frame from being transmitted to the bearing side. As the influence resulting from the frame distortion is not transmitted to the bearing side, the rotating motion of the crank, that is, the pedaling operation may be smoothly performed.

The third invention described in Claim 3 is configured to employ the rubber elastic elements shaped as O-rings which are attached to both end portions of the housing, that is, O-rings. This allows easy operation for mounting (assembling) the O-rings to the area around the housing, aiming at improved efficiency of the assembly work of the overall bearing mechanism. The O-ring attached as described above exists between the housing and the clamp nut while being elastically deformed. This ensures correction of the assembly error which occurs between those members. The O-ring provides the function of preventing propagation of vibration generated at the area around the shaft to the body frame side, that is, the vibration isolating function.

### Brief Description of Drawings

FIG. 1 is a perspective development view showing an overall structure of the present invention.
FIG. 2 is an explanatory view showing a procedure of assembling a clamp nut according to the present invention.
FIG. 3 is a view according to the present invention, showing a state of an O-ring which is crushed upon tightening of the clamp nut.

### Description of Embodiment

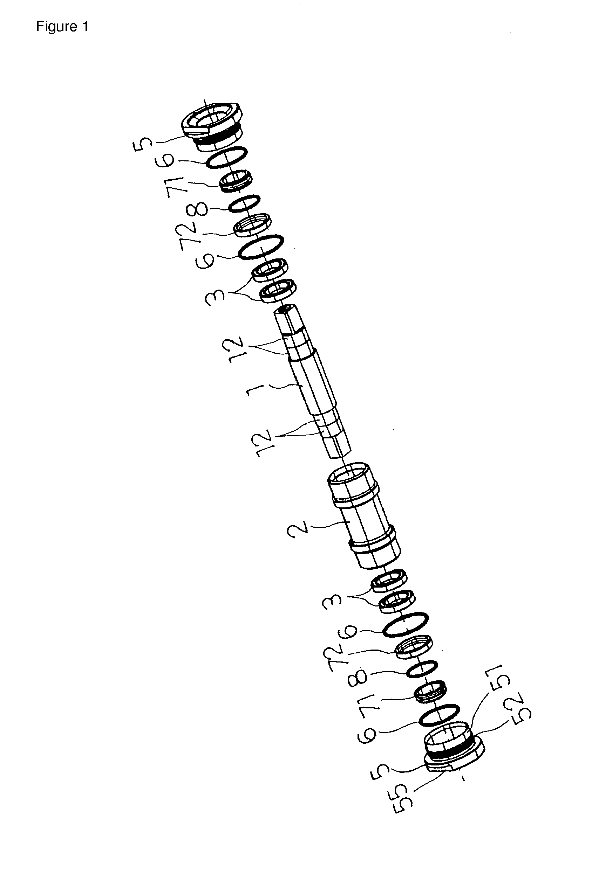

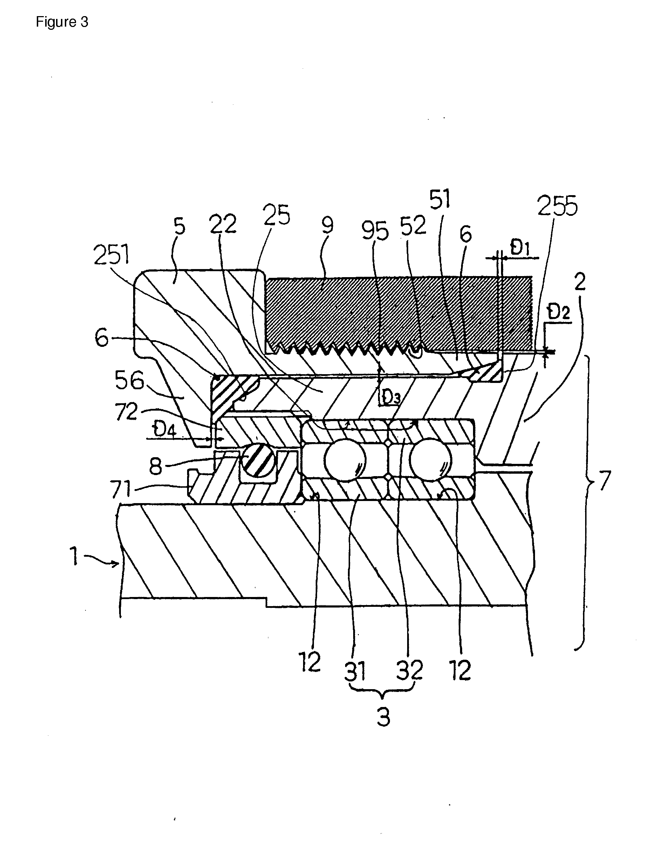

An embodiment for carrying out the present invention will be described based on FIGS. 1 to 3. The embodiment relates to a crankshaft assembly configured to support the rotating motion of the crank, in other words, a crankshaft device for bicycle, which is mounted on a cylindrical hanger member 9 formed at the lower end portion of the body frame as shown in FIG. 3. Specifically, referring to FIGS. 1 to 3, the device is provided at the center of the cylindrical hanger member 9, having both ends provided with cranks. The device basically includes a shaft 1 having both ends provided with the cranks, and inner sides where the cranks are attached, to which the bearings 3,3 are attached, a housing 2 having a cylindrical shape, which is provided at the outer diameter side of the shaft 1, and has both end portions configured to support the shaft 1 via the bearings 3,3, and clamp nuts 5 each with an overall cup-like shape, which are installed at both end portions of the housing 2 having the O-rings 6,6 as the rubber elastic elements interposed therebetween and portions of the housing 2. The aforementioned cup shaped clamp nut 5 has a disc-like flange portion 55 formed on the bottom of the clamp nut, and a cylinder portion 51 vertically formed on the upper surface of the flange portion 55. Furthermore, the cylinder portions 51 are partially provided with male screws 52 threaded with female screws 95 formed at both ends of the hanger member 9, respectively (See FIG. 3).

The aforementioned structure allows the bearings 3,3 to be provided between the shaft 1 and the housing 2 at areas adjacent to both ends of the shaft 1. Each of the bearings 3,3 has at least its inner race 31 or outer race 32 formed into a thin structure as FIG. 3 shows. That is, each of the bearings 3,3 is formed of a thin ball bearing. Assuming that such thin ball bearing is provided at the end portion of at least the side to which the gear is installed, two or more thin ball bearings are combined in parallel with each other as a bearing set so as to be attached to the respective end portions of the shaft 1 and the housing 2 as FIG. 3 shows. Specifically, referring to FIG. 3, the inner race 31 of the bearing (ball bearing) 3 is attached to small diameter portions 12,12 formed at both end portions of the shaft 1. Bearing holders 22,22 for installing the ball bearings 3,3 are provided at both end portions of the housing 2 positioned at the outer diameter side of the shaft 1. The outer races 32,32 of the ball bearings 3,3 are attached to the bearing holders 22,22, respectively.

A seal mechanism for protecting the ball bearings 3,3 is provided at the outer side where those ball bearings 3,3 are attached, that is, areas around both terminal ends of the shaft 1. Such mechanism is formed based on O-rings 8 as FIG. 3 shows. More specifically, the seal mechanism includes the O-rings 8, dust covers 71 each having a recess-like cross-section and a toric overall shape for retaining the O-ring 8, and toric seal collars 72 provided at the outer diameter side of the dust covers 71, and configured to retain the O-rings 8. The seal collar 72 at the outer diameter side may have a cylindrical straight collar structure, or a predetermined thread mechanism. If the thread mechanism is employed, a female screw has to be provided at the inner diameter side of a clamp nut mount portion 25 with which the seal collar 72 is fit. The aforementioned seal mechanisms are provided at both terminal ends outside the area at both end portions of the shaft 1 to which the ball bearings 3 are attached. In this way, the sub-assembly formed as the integral structure of the shaft 1, the bearing 3, and the housing 2 is produced (hereinafter referred to as a crankshaft sub-assembly 7).

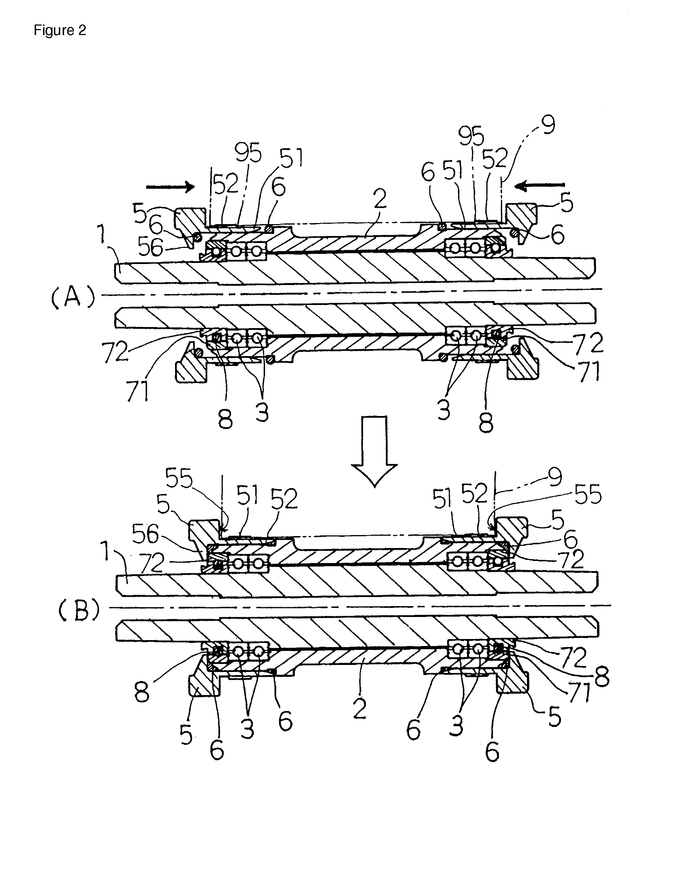

The crankshaft sub-assembly 7 as a base part is mounted on the cylindrical hanger member 9 via the clamp nuts 5 so that the crankshaft device for bicycle is configured. More specific description will be explained hereinafter. The clamp nut mount portion 25 which contributes to the operation for mounting the clamp nut 5 is formed at both end portions of the housing 2 which forms the crankshaft sub-assembly 7. Referring to FIG. 2 or 3, the O-rings 6,6 are fitted with the clamp nut mount portion 25 at two positions. Specifically, they are fitted at the two positions of the clamp nut mount portion 25 at its leading end 251 and its base end 255, respectively.

In the state where the clamp nuts 5 are attached by fitting the O-rings 6,6 at two positions, a gap D₄ is formed between the seal collar 72 that presses the bearing 3 and an inner flange 56 of the clamp nut 5 under the resilience force of the O-ring 6. Simultaneously, a gap D₁ is formed between the base end 255 of the clamp nut mount portion 25 of the housing 2 and the leading end of the cylinder portion 51 of the clamp nut 5. Furthermore, a gap D₃ constantly exists between the outer circumference surface of the clamp nut mount portion 25 and the inner circumference surface of the cylinder portion 51 of the clamp nut 5 in the circumferential direction of the clamp nut mount portion 25. A gap D₂ further exists between the outer circumference surface of the housing 2 and the inner circumference surface of the cylindrical hanger member 9. In the aforementioned way, the crankshaft sub-assembly 7 is mounted relative to the cylindrical hanger member 9 at the side of the body frame as the mount base while being completely floated. In other words, the crankshaft device of full-float type may be formed.

The procedure for assembling the structure of the embodiment will be described referring to FIG. 2. The sub-assembly structure formed by integrating the shaft 1, the housing 2 and the bearings 3, that is, the crankshaft sub-assembly 7 as the base component is inserted into the inner diameter side of the cylinder part for forming the hanger member 9 as FIG. 2(A) shows. In this state, the cylinder portions 51 of the clamp nuts 5 are provided to face both end portions of the crankshaft sub-assembly 7, respectively. Specifically, the leading end of the cylinder portion 51 of the clamp nut 5 is inserted into the toric gap formed between the tip end portion of the clamp nut mount portion 25 formed at each of the end portions of the housing 2 and an opening portion of the hanger member 9. In the aforementioned state, the clamp nut 5 is rotated while being tightened into the female screw 95 formed in the hanger member 9. Accordingly, the clamp nut 5 is advanced toward the arrow directions as FIG. 2(A) shows. Finally, the inner side of the flange portion 55 of the clamp nut 5 is brought into contact with the end portion of the cylinder portion for forming the hanger member 9 so as to complete attachment (fixture) of the clamp nut 5 to the hanger member 9. This brings the clamp nuts 5 and the hanger member 9 into a rigidly coupled state so as to ensure fixing of the clamp nuts 5 to the hanger member 9. In such a state, however, the crankshaft sub-assembly 7 may be fitted relative to the clamp nuts 5,5 and the hanger member 9 via the O-rings 6,6 while being floated. In other words, the crankshaft sub-assembly 7 is configured to be held in the fully floated state.

The embodiment with the aforementioned structure ensures that the crankshaft sub-assembly 7 as the base component having the structures around the crankshaft (shaft) 1 substantially integrated is assembled with the cylindrical hanger member 9 formed at the lower end portion of the body frame. This makes it possible to improve smooth assembling work, and furthermore, efficient operation. The crankshaft sub-assembly 7 has its both end portions attached to the hanger member 9 via the O-rings 6,6 each formed as the rubber elastic element. This allows automatic correction of the assembly error between the hanger member 9 and the crankshaft sub-assembly 7. Further, the O-rings 6,6 each formed as the rubber elastic element are interposed between the aforementioned members to support the crankshaft sub-assembly 7 in the fully floated state where the crankshaft sub-assembly 7 is floating from the hanger member 9 that constitutes the body frame. This embodiment may alleviate vibration or shock generated from the area around the crankshaft upon propagation to the body frame. This ensures alleviation of discomfort felt by the bicycle rider.

The embodiment is configured to employ the bearings 3,3 each formed as the thin ball bearing using the thin inner race 31 or the thin outer race 32. This ensures the compact and light bearing, as well as the compact and light overall structure around the crankshaft. As each of the ball bearings 3,3 is provided as the unit formed by combining at least two bearings in parallel, the loads input to the respective bearings 3,3 may be reduced, thus improving durability of the bearings 3,3.

Furthermore, the embodiment is configured to have the O-rings 6 as the rubber elastic elements attached to both end portions of the housing 2. The operation for attachment (assembly) around the housing 2 may be manually performed easily, resulting in efficient assembly work of the overall bearing mechanism. The thus provided O-ring 6 exists while being elastically deformed between the housing 2 and the clamp nut 5, correcting the assembly error generated therebetween during the assembly. The function of preventing propagation of the vibration generated around the shaft to the body frame may be provided, that is, the vibration isolation function may be performed.

### Reference Signs List

- 1: shaft
- 12: small diameter portion
- 2: housing
- 22: bearing holder
- 25: clamp nut mount portion
- 251: leading end
- 255: base end
- 3: bearing
- 31: inner race
- 32: outer race
- 5: clamp nut
- 51: cylinder portion
- 52: male screw
- 55: flange portion
- 56: inner flange
- 6: O-ring
- 7: crankshaft sub-assembly
- 71: dust cover
- 72: seal collar
- 8: O-ring
- 9: hanger member
- 95: female screw

## Claims

1. A crankshaft device for bicycle, which is provided at a cylindrical hanger member formed at a lower end portion of a body frame, serving to transmit a rotating motion from a crank to a driving wheel via a gear and a chain, comprising:
a shaft provided at a center of the cylindrical hanger member, having cranks attached to both end portions, and a bearing attached to an inner side to which the crank is attached;
a housing with a cylindrical shape provided at an outer diameter side of the shaft, having both end portions configured to support the shaft via the bearings; and
a clamp nut attached to each of both end portions of the housing having a rubber elastic element therebetween, the clamp nut having a cup-like shape as a whole, and bottom portion provided with a disc-like flange portion at which a cylinder portion is formed in a direction vertical thereto, the cylinder portion partially having a male screw threaded with a female screw formed at each of end portions of the hanger member.

2. The crankshaft device for bicycle according to claim 1, wherein:
bearings provided at portions around both end portions of the shaft between the shaft and the housing are formed each as a thin ball bearing which is obtained by making at least one of an inner race and an outer race to have a thin structure; and
a bearing set formed by combining a plurality of the thin ball bearings is provided at an end of at least a side where the gear is attached.

3. The crankshaft unit of bicycle according to claim 1, wherein:
rubber elastic elements configured as O-rings are provided at both end portions of the housing between an outer diameter side of both end portions of the housing and an inner diameter side of the clamp nut attached to the both end portions of the housing; and
the O-ring like rubber elastic elements are provided at two positions including both terminal end portions of the housing, and leading ends of the clamp nut attached to the both end portions of the housing.
